**Europäisches Patentamt**

**European Patent Office**

**Office européen des brevets**

(19)

(11) Veröffentlichungsnummer: **0 455 582 B1**

(12) **EUROPÄISCHE PATENTSCHRIFT**

(45) Veröffentlichungstag der Patentschrift: **29.03.95**

(21) Anmeldenummer: **91810129.6**

(22) Anmeldetag: **26.02.91**

Die Akte enthält technische Angaben, die nach dem Eingang der Anmeldung eingereicht wurden und die nicht in dieser Patentschrift enthalten sind.

(51) Int. Cl.6: **C04B 28/24**, C04B 38/02,
// (C04B28/24,22:00)

(54) **Verwendung von in Gegenwart von Wasser abbindenden Massen zur Befestigung von Dübeln und Ankerstangen.**

(30) Priorität: **28.03.90 DE 4009998**

(43) Veröffentlichungstag der Anmeldung:
**06.11.91 Patentblatt 91/45**

(45) Bekanntmachung des Hinweises auf die Patenterteilung:
**29.03.95 Patentblatt 95/13**

(84) Benannte Vertragsstaaten:
**CH DE FR GB IT LI**

(56) Entgegenhaltungen:
**EP-A- 0 257 128    EP-B- 0 148 280**
**WO-A-89/02878    DE-A- 3 246 602**
**DE-A- 3 246 604    DE-A- 3 246 619**
**DE-A- 3 744 210    US-A- 4 642 137**
**US-A- 4 696 698**

(73) Patentinhaber: **HILTI Aktiengesellschaft**

**FL-9494 Schaan (LI)**

(72) Erfinder: **Hinterwaldner, Rudolf**
**Kastanienstrasse 13**
**W-8000 München 90 (DE)**
Erfinder: **Mauthe, Peter**
**Herbert-Kessel-Strasse 8**
**W-8939 Türkheim (DE)**
Erfinder: **Hense, Ulrich, Dr.**
**Römerauterrasse 18**
**W-8910 Landsberg/Lech (DE)**

(74) Vertreter: **Wildi, Roland**
**Hilti Aktiengesellschaft**
**Patentabteilung**
**FL-9494 Schaan (LI)**

EP 0 455 582 B1

**Beschreibung**

Die Erfindung betrifft die Verwendung von in Gegenwart von Wasser abbindenden Formmassen auf anorganischer Grundlage, umfassend feinteiliges $SiO_2$ oder Gemische von feinteiligem $SiO_2$ und $Al_2O_3$, zumindest teilweise wasserlösliches Alkali- und/oder Ammoniumsilikat und/oder deren Precursoren aus den entsprechenden Oxiden bzw. Hydroxiden und amorpher feinteiliger Kieselsäure. Weiter betrifft die Erfindung ein Verfahren zur Härtung dieser Massen.

Aus den deutschen Offenlegungsschriften DE 32 46 602 A1, 32 46 604 A1 und 32 46 619 A1 sind härtbare, wäßrige Massen auf der vorgenannten Grundlage bekannt. Diese Massen werden bestimmungsgemäß zur Herstellung von Formkörpern verwendet. Zur Herstellung dieser Formkörper müssen diese Massen in Formen eingebracht und darin vorzugsweise auf mindestens 50°C und sogar bis zu 200°C erhitzt werden. Nach der Entformung ist gegebenenfalls eine weitere Nachhärtung bei Temperaturen von 80 - 200°C erforderlich. Die erhaltenen Formkörper weisen Biegefestigkeiten von 15 bis 30 MPa, Druckfestigkeiten von 25 bis 90 MPa, gute Schwingungsdämpfung, relativ niedrige Schrumpfwerte und gute Wärmeformbeständigkeit auf.

Die Formmassen besitzen aber den erheblichen Nachteil, daß sie regelmäßig zum Abbinden bzw. zur Polykondensation eine erhöhte Temperatur von 50 - 200°C, vorzugsweise 60 - 90°C benötigen, zum Teil um wenigstens ausreichende Grünfestigkeit zur Entformung zu erreichen, wonach dann ein erneutes Erhitzen zur Nachhärtung erforderlich wird. Die bei der Herstellung von Formkörpern offenbar häufig notwendige Erwärmung zur Erzielung annehmbarer Härtungszeiten ist bei dem bei Formkörpern im allgemeinen günstigen Verhältnis von Volumen zur Oberfläche beachtenswert. Jedenfalls zeigt sich darin für den Fachmann, daß bei Härtungsvorgängen mit einem erheblich ungünstigeren Verhältnis von Volumen zu Oberfläche, z.B. bei dünnen Schichten, vor allem dann wenn an umgebende Kontaktflächen die exotherm gebildete Wärmemenge abgeleitet wird, mit ganz erheblichen Härtungszeiten bzw. drastischen Verzögerungen gerechnet werden muß. Es ist zwar schon versucht worden, die Härtung mineralischer Massen wie Portlandzement durch Zugabe bestimmter Bindemittel zu beschleunigen und trotzdem Formkörper befriedigender Festigkeit zu erhalten (US-Patentschrift 4 642 137). Diese Lösung ist jedoch auf Metakaolin-haltige Bindemittel beschränkt. Ebensowenig können die aus der EP-A1 0 257 128 bekannten,härtungsbeschleunigten und säurebeständigen Massen auf der Grundlage von Stoffen des Typs des Aluminatzements mit geringen Gehalten an $Ca(OH)_2$ wegen der berechtigten Vorbehalte gegen das Dauerverhalten solcher Massen befriedigen.

Der Erfindung liegt demzufolge vor allem die Aufgabe zugrunde, eine Masse zur Verfügung zu stellen, die frei ist von den vorgenannten Nachteilen, vor allem bei ungünstigem Volumen zu Oberflächenverhältnissen und großen, wärmeableitenden Kontaktflächen der gesonderten Zuführung von Wärme von außen nicht bedarf und trotzdem ohne eine solche Wärmezufuhr in kurzer Zeit aushärtet. Weitere Aufgaben ergeben sich auch aus den nachfolgend ersichtlich werdenden Vorteilen.

Gegenstand der Erfindung ist demnach die Verwendung von in Gegenwart von Wasser abbindenden und aushärtenden Massen auf der Grundlage von

a) feinteiligem $SiO_2$ und/oder feinteiliges $SiO_2$ und $Al_2O_3$ enthaltenden Gemischen

b) zumindest teilweise wasserlöslichen Alkali- und/oder Ammonium-silikaten und/oder deren Precursoren aus den entsprechenden Oxiden bzw. Hydroxiden und amorpher Kieselsäuren

c) anorganischen und/oder metallorganischen Verbindungen, die beim Kontakt mit Wasser die Härtung der Formmasse beschleunigende starke Wärmetönung von $\geq$ 500 joule/g zeigen

und gegebenenfalls Gehalten wie Füllstoffen, Treibmitteln und dergleichen als Mörtelmasse zur Befestigung von Dübeln und Ankerstangen in Bohrlöchern.

Der Bestandteil a) ist der bei der Polykondensation für die Bildung des Rückgratpolymeren im wesentlichen maßgebliche Bestandteil, während b) im wesentlichen als Härter wirkt, wobei er zumindest teilweise in das Rückgratpolymere eintritt. Der Bestandteil c) hat vornehmlich reaktionsbeschleunigende Wirkung, wobei jedoch der Eintritt zumindest von Teilen des Betandteils c) in das Rückgratpolymere keineswegs ausgeschlossen ist. Liegen die 3 Bestandteile als Trockengemisch vor, so wird die Härtungsreaktion im allgemeinen durch Zutritt von Wasser ausgelöst, wenn auch nicht ausgeschlossen ist, daß das Gemisch aus a) und b) wasserhaltig ist und dann die Härtungsreaktion durch Zugabe des Beschleunigers c) und gegebenenfalls gleichzeitigem Zusatz von Wasser erfolgt.

Das als Bestandteil a) vorgesehene $SiO_2$ liegt vorzugsweise in amorpher, insbesondere wasserfreier Form vor. Diese Form ist auch für das feinteilige Gemisch aus $SiO_2$ und $Al_2O_3$ bevorzugt, wenn auch das $Al_2O_3$, z.B. zum Teil in kristalliner Form vorliegen kann. Das $SiO_2$ kann auch aus der amorphen, wasserhaltigen Kieselsäure stammen.

Die Gewichtsverhältnisse von $SiO_2$ und $Al_2O_3$ im Gemisch liegen vorzugsweise im Bereich von 5 - 80 Gew.-% $SiO_2$ und 95 - 20 Gew.-% $Al_2O_3$. Die Oxide des Bestandteils a) können Verunreinigungen als weitere Bestandteile wie Fe, Na, K usw. in Form ihrer Oxide oder Silikate bzw. Aluminate enthalten. Die Verunreinigungen liegen meist in Mengen von insgesamt weniger als 15 bzw. 10 Gew.-%, bezogen auf das Gesamtgemisch des steinbildenden Bestandteils a) vor. Besonders geeignet haben sich Stäube aus Hochtemperaturschmelzprozessen, Filterstäube, Elektrofilterasche aus Hochtemperaturkraftwerken, kalzinierte, gemahlene Bauxite.

Als Härter für die Rückgratbindemittel a) eignen sich Alkali- und/oder Ammoniumsilikate, die allein oder in Abmischungen eingesetzt werden können. Sie besitzen im allgemeinen einen Überschuß an freiem Alkali und/oder Ammonium. Die Molverhältnisse zwischen Alkali bzw. Ammonium zu Siliziumdioxid liegen im allgemeinen zwischen 1,0 und 5 Mol, vorzugsweise 1,5 bis 4 Mol $SiO_2$ je Mol Alkali bzw. Ammonium. Erfindungsgemäß besonders bevorzugt sind Kali- und/oder Ammoniumwasserglas, weil sie insbesondere in Verbindung mit den nachstehend beschriebenen Additiven nicht nur die Polykondensation beim Abbindeprozeß beschleunigen, sondern auch bessere und homogenere physikalische Endeigenschaften liefern. Die Alkali- bzw. Ammoniumsilikate können auch in Form wäßriger Zubereitungen vorliegen.

Anstelle der Silikate können auch deren Bildungskomponenten, nämlich die entsprechenden Oxide bzw. Hydroxide der Alkali bzw. des Ammoniums und amorphe, disperspulverförmige, wasserhaltige Kieselsäure enthalten sein

Für die erfindungsgemäß verwendeten Massen besonders bevorzugte steinbildende Bestandteile a) und b) bzw. Gemische sind in den deutschen Offenlegungsschriften DE 32 46 602 A1, 32 46 604 A1 und 32 46 619 A1 und der europäischen Patentschrift 0 148 280 B1 beschrieben.

Obwohl beide Reaktionskomponenten, das Rückgratbindemittel a) und der Härter b) hygroskopisch sind, lassen sich damit ein- und zweikomponentig zu verwendende Systeme herstellen. Beim Einsatz eines wasser- und wasserdampfundurchlässigen Packmittels wird es möglich, ein gebrauchsfertiges Gemisch aus Rückgratbindemittel und Härter herzustellen und abzupacken, das über mehrere Monate lagerstabil ist. An der Gebrauchsstelle wird dieses Gemisch mit der entsprechenden Wassermenge angeteigt.

Aber auch als 2-Komponenten-System kann diese polykondensierende Masse hergestellt und abgepackt werden. In diesem Fall kann der Härter zuvor in der entsprechenden Wassermenge gelöst und dann in einem alkali- und wasserbeständigen Behältnis abgepackt werden.

Da das Wasser im erfindungsgemäß verwendeten polykondensierenden System nur Vehikel- und Benetzungsfunktionen besitzt, kann es zusätzlich zur Aktivierung der erfindungsgemäßen Additiven genutzt werden. Dies ist dann von besonderem Vorteil, wenn als Additiv wenigstens ein hydraulisch abbindender Stoff gegenwärtig ist.

Der gemäß vorliegender Erfindung verwendete Beschleuniger-Bestandteil c) stammt aus den Klassen der anorganischen, der metallorganischen Verbindungen und/oder der Metallhydride, die beim Kontakt mit Wasser eine die Abbinde- und Härtungs-Reaktion beschleunigende starke Wärmetönung von $\geq$ 500 joule/g zeigen.

Geeignete Verbindungen gemäß Bestandteil c) stammen vorzugsweise aus folgenden Gruppen:
- Gruppe 2 des Periodensystems, wie z.B. wasserfreie Erdalkali- und Magnesiumoxide. Hierzu gehören u.a. Calcium-, Barium- und Strontiumoxide;
- Klinkerphasen beim Herstellen von Zementen, wozu u.a. das Alit ($C_3S$), das Tricalciumaluminat ($C_3A$) besonders geeignet ist (vgl. Zementliteratur, wobei C = Calciumoxid, S = Siliciumdioxid und A = Aluminiumoxid);
- Ammoniumsilikate
- Anhydrite
- Metallcarbide der allgemeinen Formel $M^I_2C_2$ oder $M^{II}C_2$, wie z.B. Calciumcarbid ($CaC_2$), Eisencarbid ($Fe_3C$),
- Metallalkyle der allgemeinen Formel Mn $R_n$, wie z.B. Triisobutylaluminium
- Metallamide, Metallimide und Metallnitriden der allgemeinen Formel $MNH_2$; $M_2NH$; $M_3N$, wie z.B. Natrium- oder Lithiumamid;
- Metallazide der allgemeinen Formel $XN_3$, worin X für Metallkation steht, wie z.B. Natriumazid;
- organische Azide der allgemeinen Formel $RN_3$, worin R = Alkyl-, Aryl- und/oder Acylreste sind.
- Metallcarbonyle aus der Gruppe ein- und mehrkerniger Koordinationsverbindungen, in denen Kohlenoxid-Moleküle koordinativ an Metallatome angebunden sind, wie z.B. Dinatriumtetracarbonylferrat.
- Metallhydride, wozu sowohl die stöchiometrischen Metallhydride, z.B. Hydride der Alkali- und Erdalkalimetalle, die hochpolymeren Hydride, wie z.B. von Aluminium, Beryllium, Magnesium und die sogenannten komplexen Hydriden, wie z.B. Alanate, Boranate, gehören.
- Ammoniumnitrate und -nitrite.

Entscheidend für die Eignung einer Verbindung für die Zwecke der vorliegenden Erfindung ist, daß sie beim Kontakt mit Wasser exotherme Reaktionen bzw. die steinbildende, reaktionsbeschleunigende Wärmetönung zeigt, die ≥ 500 Joule/g liefert.

Die Hydratationswärmen der folgenden Verbindungsbeispiele verdeutlichen es:

| | |
|---|---|
| $C_3S$ | 500 J/g |
| $C_3A$ | 1350 J/g |
| MgO | 850 J/g |
| CaO | 1160 J/g |
| Ammoniumnitrat | 1571 J/g. |

Das Wasser besitzt zwar in den zu verwendenden, polykondensierenden Massen im wesentlichen Vehikel- und Benetzungsfunktion, kann jedoch auch zur Aktivierung eines z.B. hydraulischen Bestandteils c) benutzt werden. So sind zur Reaktionsbeschleunigung handelsübliche hydraulische abbindende Bindemittel, wie Portlandzemente, Eisenportlandzemente, Traßzemente, Hochofenzemente, Ölschieferzemente, Tonderschmelzzemente und Gemische davon, aber auch Alkali- und Erdalkalisalze der Kohlensäure wie z.B. Lithiumhydrogencarbonat, Lithiumcarbonat, Bariumcarbonat, geeignet. Während die Portlandzemente, Hochofen-, Traß- und Ölschieferzemente einen relativ hohen Calciumoxid- und einen niedrigen Aluminiumoxidgehalt besitzen, sind z.B. die Gewichtsverhältnisse beim Tonerdeschmelzzement etwa gleich wie dies die Tabelle 1 zeigt. Beide Zementarten zeigen Hydratationswärme beim Kontakt mit Wasser; die Wärmetönung ist beim Kontakt mit Wasser unterschiedlich. Dasselbe gilt für die Alkali- und Erdalkalicarbonate.

Wenngleich die Hydratationswärme eines jeden Zusatzes beim Kontakt mit Wasser ein wesentliches erfinderisches Merkmal darstellt, so ist zusätzlich eine Reihe von synergetischen Effekten beim Abbinden zu beobachten. Es wurde überraschenderweise gefunden, daß auch dann mit den über die Polykondensation abbindenden Rückgratbindemitteln eine beschleunigende Polykondensation, Hydratation und Abbindung nach Zusatz eines oder mehrerer der erfindungsgemäßen Beschleuniger beim Kontakt bzw. Anteigen mit Wasser gegeben ist, wenn die Abbindetemperatur in einem 100 g-Ansatz ≤ +50°C ist. Demgegenüber zeigt eine Masse mit den Rückgratbindemitteln und Härter, aber ohne Beschleuniger nur partielles Polykondensations- und Abbindeverhalten und ist nach Tagen noch weich, wenn die Masse nicht vorher ausgetrocknet ist und erreicht keine optimalen Endeigenschaften und Festigkeiten. Somit lassen sich in Abhängigkeit der Oxidgemischzusammensetzung mit oder ohne amorphe Kieselsäuren durch geeignete Auswahl eines oder mehrerer erfindungsgemäßer Beschleuniger und deren Zusatz die Polykondensation- und Abbindegeschwindigkeiten in weiten Grenzen - auch in kleinen Ansatzmengen - einstellen. Hierbei unterscheidet man in der Praxis ebenfalls - wie bei Massen auf der Grundlage von organischen Reaktionsharzen - zwischen Topfzeit (Fließfähigkeit), Grün- und Endfestigkeit. So lassen sich z.B. erfindungsgemäß gefüllte und ungefüllte Formmassen herstellen, die

Topfzeiten:         zwischen 5 Sekunden und 30 Minuten

Grünfestigkeiten:     = 50 % der Endfestigkeiten zwischen 60 Sekunden und 30 Minuten

Endfestigkeiten:      = 90 % nach 30 Minuten

bei Raumtemperatur (20 - 23°C) liefern, auch wenn die Ansatzmengen 100 g sind und die gemessenen Wärmetönungen bei diesen Ansatzmengen, also der gesamten Formmasse, + 35 °C sind.

Aus der deutschen Offenlegungsschrift DE 37 44 210 A1 ist es zwar bekannt, daß die Härtung bei Massen der in Rede stehenden Art beschleunigt werden kann, wenn zur Herstellung von Schaumkörpern Peroxi-Verbindungen als Sauerstoff-abspaltende Schäummittel zugesetzt werden und zur Zersetzungsbeschleunigung ein Reduktions- und/oder Oxidationsmittel und/oder ein feinteilige Stoff hoher Oberfläche zugesetzt wird. Abgesehen davon, daß es sich hier um einen eng begrenzten Sonderfall handelt, der bei der Herstellung ungeschäumter und für die Herstellung aller anderen geschäumten Formkörper nicht anwendbar ist, wird hier mit der Ausnutzung der exothermen Energie der Peroxi-Zersetzung von einem völlig anderen Wirkungsprinzip Gebrauch gemacht.

Werden als Bestandteile c) solche Verbindungen eingesetzt, die beim Kontakt mit Wasser Gase bilden oder sich aufblähen, so lassen sich mit dieser Hilfe interessante und stabile Schaumstrukturen herstellen. Calciumcarbid, das beim Kontakt mit Wasser neben einem Gas einen Reaktionsbeschleuniger bildet, der sich anschließend in die abgebundene Rückgratbindemittel-Matrix integriert, ist ein Beispiel für eine solche Verbindung.

Die Gehalte an Bestandteil c) sind abhängig von dem Temperatureinsatzbereichen, den Abbindegeschwindigkeiten und den Endfestigkeiten. Sie liegen im allgemeinen zwischen 0,1 und 25 Gew.-%, vorzugsweise zwischen 1 und 20 Gew.-% und insbesondere zwischen 2 und 15 Gew.-% bezogen auf das

EP 0 455 582 B1

Rückgratbindemittel.

Neben diesen aus den Bestandteilen c) sich bildenden Nebenprodukt-Gasen, die als Treib- und Blähmittel wirken, lassen sich aus den erfindungsgemäß verwendeten Massen auch Schaumkörper herstellen bei Verwendung der üblichen Treib- und Blähmittel. Hierzu gehören z.B. die in der Deutschen Offenlegungsschrift DE 32 46 619 A1 beschriebenen Mittel aber auch chemische Treibmittel, wie z.B. Azodicarbonamid, Hydrazin-Derivate, Semicarbazide, Tetrazole, Benzoxazine.

Schäume aus den erfindungsgemäßen abbindenden Massen lassen sich auch über die Einführung von Gasen, wie z.B. Luft, Stickstoff, Kohlendioxid auch während der Topfzeitphase erzeugen. Diese Technik ist von Interesse für niedervolumige Produkte, vor allem solche mit einem Volumen $\leq$ 100 cm$^3$, wie dies bei Dübelmassen in der Befestigungstechnik der Fall ist. Dieser Gasstrom kann zusätzlich erwärmt sein, wodurch die Polykondensation und Abbindung beschleunigt wird und/oder die Zusatzmengen an erfindungsgemäßen Additiven reduziert werden können.

Des weiteren können die erfindungsgemäß verwendeten Massen Füllstoffe, Pigmente, Farbstoffe, Thixotropiermittel, aber auch andere Additive zur Regulierung der rheologischen Eigenschaften, der Benetzung und dergleichen enthalten Aber auch Gehalte zur Verbesserung der Haftung, wie z.B. physikalisch und/oder chemisch abbindende Kunstharzdispersionen, wie z.B. auf der Grundlage von Polyvinylacetat, Acryl- und Methacryl-, Polyesterverbindungen und deren Copolymere sind möglich.

Aus der Klasse der Füllstoffe eignen sich besonders solche auf der Grundlage von Siliziumdioxid, wie z.B. Quarzmehle und -sande, Aluminiumoxid, wie z.B. Korundmehle und -granulate. Da diese Füllstoffe einen partiellen amorphen Anteil besitzen können, tragen sie mit zur Verstärkung der abgebundenen Matrix bei, wie überraschend gefunden wurde. Zur Verstärkung der Matrix können natürlich auch Fasermaterialien aus anorganischen Polymeren, wie z.B. Aramid, Polyethylen, Polypropylen, eingesetzt werden.

Die erfindungsgemäß zu verwendenden Massen haben breite Einsatzbereiche, insbesondere im Hoch-, Tief- und Bergbau, sowie im Hand- und Heimwerkerbereich zur Befestigung von Dübeln und Ankerstangen in Bohrlöchern. Die mit Härter hergestellten wasserhaltigen, fließfähigen und/oder thixotrop eingestellten Pasten aus diesen Geopolymeren lassen sich dabei wie normale Zementmörtel und Polymermörtel verarbeiten und auch deren Funktionen und Aufgaben in vielen Anwendungsbereichen übernehmen. Da die Eigenschaften der erfindungsgemäß verwendeten, abbindenden Massen in relativ weiten Grenzen variabel einstellbar sind, lassen sich u.a. schnell-, mittel- und langsamabbindende Formulierungen einstellen. Somit können auf dieser Grundlage Dübelmassen für den Befestigungssektor aber auch für den gesamten Bau- und Bergbausektor bereitgestellt werden. Hergestellte Schäume zeichnen sich durch hohe Druckstabilität bei niedrigem Raumgewicht aus und bewirken Schall- und Wärmedämmung.

Die Verarbeitung der erfindungsgemäß zu verwendenden Massen kann in bekannten handelsüblichen 2-Komponenten-Verarbeitungsvorrichtungen, wie Mischpistolen, Misch- und Dosiervorrichtungen, für Polymerbetone, aber auch in sogenannten 2-Kammer-Systemen erfolgen. Aber auch ein einfaches Zusammenmischen der beiden Komponenten in einem Topf ist möglich.

Damit wird ein seit langer Zeit, insbesondere im Hoch-, Tief- und Bergbau sowie in Hand- und Heimwerkerbereichen seit Jahren bestehendes Bedürfnis nach anorganischen reaktiven Dübelmassen, die bei Umgebungstemperaturen einsetzbar und einfach handhabbar sind, die beim Abbindeprozeß nicht unkontrollierbar und z.T. nur unvollständig ablaufen und innerhalb vertretbaren Zeiten abgeschlossen sind, befriedigt.

Auf der Grundlage der erfindungsgemäß zu verwendenden Geopolymeren wird für den Fachmann und Heimwerker eine abbindende Dübelmasse auf anorganischer Rückgratbindemittel-Grundlage bereitgestellt, die sich u.a. durch folgende Vorteile und Fortschritte auszeichnet:
-   leichte Verarbeitbarkeit
-   umwelt- und ökologiefreundlich
-   unkritische Mischungsverhältnisse der 2-Komponentensysteme
-   einstellbare Topf- und Abbindezeiten
-   auch bei Temperaturen unter 0 °C verarbeitbar
-   unter Wasser abbindend
-   nicht brennbar
-   außerordentlich wirtschaftlich im Vergleich zu den Polymerbetonen auf organischer Polymergrundlage
Die Eigenschaften der abgebundenen Formmassen sind u. a.:
-   frühe Grün- und Endfestigkeiten, z. B. 30 Minuten
-   Unbrennbarkeit, d. h. keine Rauchgasentwicklung
-   Beständigkeiten gegenüber Lösemittel, gegen schwache und starke Alkalien sowie gegen Schwefelsäure
-   Oberflächenhärte nach Mohs 3 bis 8 einstellbar

5

- Raumgewichte

| bei Kompaktmassen: | 1600 - 3500 kg/m$^3$ |
|---|---|
| bei Schaummasse: | 200 - 1000 kg/m$^3$ |

- Biegefestigkeit: 10 - 40 MPa einstellbar
- Druckfestigkeit: 20 -100 MPa einstellbar
- E-Modul: 10.000 - 50.000 MPa
- lineare Wärmedehnung: 1 bis 8 x $10^{-6}$/k$^{-1}$
- hohe Schwingungsdämpfung
- Wärmeformbeständigkeit
- Niedrigeres Kriechverhalten im Vergleich zu Polymerbetonen
- Hohe Verbundfestigkeiten beim Einsatz als Verbundmörtel und/oder Dübelmasse
- hohe Alterungsbeständigkeit

Die Erfindung wird anhand nachstehender Beispiele erläutert, ohne auf diese beschränkt zu sein.

**Beispiele**

Zur Herstellung der Massen dar, Beispiele 1 bis 16 wurden folgende Komponenten eingesetzt:

Oxidgemisch (Feststoff)

Nr. 1 : 25 Gew-% $SiO_2$
75 Gew-% $Al_2O_3$
Nr. 2 : 30 Gew-% $SiO_2$
70 Gew-% $Al_2O_3$
Nr. 3 : 40 Gew-% $SiO_2$
60 Gew-% $Al_2O_3$

Härterlösung

Nr. 1 : 20,00 Gew-% $SiO_2$
20,88 Gew-% $K_2O$
59,12 Gew-% Wasser
Nr. 2 : 21,28 Gew-% $SiO_2$
21,60 Gew-% $K_2O$
57,12 Gew-% Wasser
Nr. 3 : 19,75 Gew-% $K_2O$
26,08 Gew-% $SiO_2$
1,15 Gew-% $NH_4OH$
53,02 Gew-% Wasser

Beschleuniger: siehe Tabelle 2

Zur Prüfung der Massen wurde ein Beton der Güteklasse B 15 und als Ankerstange M12 ausgewählt.

**Beispiele 1 bis 16**

Durch Mischen der trockenen Bestandteile aus Oxidgemisch, Füllstoffe und Beschleuniger wurde ein homogenes Trockengemenge hergestellt. Anschließend wurde die Härterlösung in einem Becher vorgelegt und mittels einem schnellaufenden Rührer die Feststoffmenge portionsweise eingerührt. Schnelles Rühren ist deshalb erforderlich, um die entstehende Thixotropie zu brechen. Die Ansatzmengen betrugen 200 g. Der jeweilige homogene Mörtelteig wurde in Bohrlöcher (Durchmesser 14 mm, Tiefe 12 cm) gegossen und zu 2/3 verfüllt. Anschließend wurden Ankerstangen M12 in das jeweilige Mörtelbett im Bohrloch eingedrückt.

Die Zusammensetzungen der Formmassen und die ermittelten Kenndaten sind in Tabelle 2 zusammengefaßt.

**Vergleichsbeispiel 1**

100 g Oxidgemisch Nr. 1 und 150 g Quarzsand (0,1 - 0,25 mm) wurden homogen gemischt und anschließend in 100 g Härterlösung Nr. 1 mit einem schnellaufenden Rührer eingerührt. Mit diesem Mörtelteil wurden 3 Bohrlöcher verfüllt und die technischen Kenndaten ermittelt. Die Formmasse hatte eine Topfzeit von 350 Minuten und die Grünfestigkeit wurde nach 4 Tagen erreicht. Eine Verbundfestigkeit war nach 2 Wochen noch nicht gegeben.

EP 0 455 582 B1

Tabelle 1

*Chemische Zusammensetzung von Zementen ( Anhaltswerte in %)*

| Oxide | normal | Portlandzement | | weiß | Eisen-portland-zement | Hoch-ofen-zement | Traß-zement | Ölschiefer-zement | Tonerde-schmelz-zement |
|---|---|---|---|---|---|---|---|---|---|
| | | früh-hochfest | mit hohem Sulfat-widerstand | | | | | | |
| CaO | 61-69 | 66 | 64 | 67 | 50-66 | 44-61 | 47-60 | 54-61 | 37-39 |
| SiO$_2$ | 18-24 | 20 | 21 | 23 | 19-28 | 21-30 | 20-28 | 18-23 | 3-5 |
| Al$_2$O$_3$ | 4-8 | 5 | 4 | 4 | 4-12 | 6-15 | 5-10 | 6-8 | 38-40 |
| Fe$_2$O$_3$ | 1-8 | 3 | 7 | <1 | 1-4 | 1-3 | 2-4 | 3-4 | 15-18 |
| MgO | <5 | <2 | <2 | <2 | <6 | <7 | <3 | <2 | <15 |
| SO$_3$ | 2-4 | 3-4 | 2-4 | 2-4 | 2-4 | 2-4 | 2-4 | 2-4 | <0,3 |

Tabelle 2

Beispiele Nr.

| | Einheit | 1 | 2 | 3 | 4 | 5 | 6 | 7 | 8 | 9 | 10 | 11 | 12 | 13 | 14 | 15 | 16 |
|---|---|---|---|---|---|---|---|---|---|---|---|---|---|---|---|---|---|
| Oxidgemisch 1 | Gew.-% | 30,1 | - | - | 30,1 | - | 27,7 | - | - | 25,0 | - | - | 27,0 | 27,0 | 22,0 | - | - |
| Oxidgemisch 2 | | - | 30,1 | - | - | 25,6 | - | 26,0 | - | - | 21,3 | - | - | - | - | - | 29,0 |
| Oxidgemisch 3 | | - | - | 30,1 | - | - | - | - | 25,3 | - | - | 22,2 | - | - | - | 22,2 | - |
| Härter 1 | Gew.-% | 30,1 | 30,1 | 30,1 | - | - | - | - | - | - | - | - | - | - | - | - | 23,0 |
| Härter 2 | | - | - | - | 30,1 | 24,0 | 27,1 | 26,0 | 25,3 | 25,0 | 21,3 | 22,2 | 27,0 | 27,0 | - | 22,2 | - |
| Härter 3 | | - | - | - | - | - | - | - | - | - | - | - | - | - | 22,0 | - | - |
| Füllstoff Quarzsand 0,1-0,25 mm | Gew.-% | 33,7 | 33,7 | 33,7 | 33,7 | - | 41,7 | 26,0 | - | - | 31,9 | 33,3 | 40,5 | 43,25 | 21,0 | 26,6 | 46,0 |
| Füllstoff Korund 0-0,5 mm | | - | - | - | - | 41 | - | 13,0 | 38,0 | 38,0 | 10,6 | 11,1 | - | - | 16,0 | 12,2 | - |
| Beschleuniger | | | | | | | | | | | | | | | | | |
| – Calciumoxid | Gew.-% | 6,1 | 6,1 | 6,1 | 6,1 | - | 3,5 | 2,45 | - | 2,5 | 4,25 | - | - | - | 2,2 | 2,2 | - |
| – Bariumoxid | | - | - | - | - | 9,4 | - | - | 5,05 | - | - | - | - | - | 4,3 | - | - |
| – Magnesiumoxid | | - | - | - | - | - | - | - | - | 2,25 | - | - | - | - | - | - | - |
| – Portlandzement | | - | - | - | - | - | - | 3,25 | 3,8 | 3,6 | 8,5 | 6,6 | - | - | 6,6 | 6,6 | - |
| – Tonerdeschmelzzement | | - | - | - | - | - | - | 3,25 | 2,5 | 3,6 | - | - | - | - | 4,3 | 6,6 | - |
| – Lithiumcarbonat | | - | - | - | - | - | - | 0,05 | 0,05 | 0,05 | - | - | - | - | - | 0,05 | - |
| – Calciumcarbid | Gew.-% | - | - | - | - | - | - | - | - | - | 2,15 | 4,6 | - | - | - | - | - |
| – Natriumamid | | - | - | - | - | - | - | - | - | - | - | - | - | - | 1,6 | - | - |
| – Natriumazid | | - | - | - | - | - | - | - | - | - | - | - | - | - | - | - | - |
| – Dinatriumtetra-Carbonyl-ferrat (II) | | - | - | - | - | - | - | - | - | - | - | - | - | - | - | - | 2,0 |
| – Aluminiumhydrid | | - | - | - | - | - | - | - | - | - | - | - | - | 2,75 | - | - | - |
| + Wasser, zusätzliches | Gew.-% | - | - | - | 2,4 | - | - | 2,6 | 2,5 | 3,0 | 3,2 | 4,5 | 5,5 | 1,0 | 5,5 | 4,5 | 1,4 |
| Topfzeit | Min. | 10 | 10 | 15 | 20 | 40 | 30 | 15 | 15 | 15 | 15 | 10 | 20 | 30 | 60 | 10 | 15 |
| Grünfestigkeit nach | Min. | 30 | 25 | 40 | 35 | 60 | 60 | 45 | 45 | 40 | 30 | 30 | 60 | 90 | 240 | 30 | 60 |
| Verbundfestigkeit nach | Min. | 180 | 150 | 210 | 200 | 240 | 360 | 240 | 240 | 210 | 240 | 180 | 300 | 360 | 1440 | 360 | 240 |
| Auszugswert/M12-Ankerstange | KN | 40 | 48 | 50 | 45 | 40 | 40 | 45 | 45 | 42 | 25 | 20 | 25 | 30 | 50 | 50 | 25 |

**Patentansprüche**

1. Verwendung von in Gegenwart von Wasser abbindenden und härtenden Massen auf der Grundlage
   a) von feinteiligem $SiO_2$ oder feinteiliges $SiO_2$ und $Al_2O_3$ enthaltenden Gemischen

b) von zumindest teilweise wasserlöslichen Alkalisilikaten und/oder Ammoniumsilikaten und/oder Alkalioxiden bzw. -hydroxiden und amorpher dispers-pulverförmiger Kieselsäure als Alkalisilikat-Precursoren
c) von solchen anorganischen und/oder metallorganischen Verbindungen, die beim Kontakt mit Wasser eine die Härtung der Masse beschleunigende starke Wärmetönung von $\geq$ 500 joule/g und
d) gegebenenfalls mit Gehalten wie Füllstoffen, Treibmitteln und dergleichen
zur Befestigung von Dübeln und Ankerstangen in Bohrlöchern.

2. Verwendung gemäß Patentanspruch 1, **dadurch gekennzeichnet,** daß in dem zu verwendenden Gemisch a) das Gewichtsverhältnis von $SiO_2$ zu $Al_2O_3$ im Bereich von 5 - 98 $SiO_2$ zu 2 - 95 Gew.-% $Al_2O_3$, vorzugsweise von 5 - 80 zu 95 - 20 Gew.-% beträgt.

3. Verwendung gemäß Patentanspruch 1 oder 2, **dadurch gekennzeichnet,** daß die Gemische a) Stäube aus Hochtemperaturschmelzprozessen, Filterstäube, Elektrofilterasche aus Hochtemperaturkraftwerken und/oder kalzinierte Bauxite sind.

4. Verwendung gemäß einem der vorhergehenden Patentansprüche, **dadurch gekennzeichnet,** daß ein Teil oder das gesamte $SiO_2$ des Bestandteils a) unlösliches $SiO_2$ aus amorphen, dispers-pulverförmigen, wasserhaltigen Kieselsäuren ist.

5. Verwendung gemäß einem der vorhergehenden Patentansprüche, **dadurch gekennzeichnet,** daß im Bestandteil b) das Alkali Ammonium, Natrium und/oder Kalium ist und die Molverhältnisse zwischen Alkali bzw. Ammonium und Siliziumdioxid zwischen 1 und 5, vorzugsweise 1,5 - 4 Mol $SiO_2$ pro Mol Alkali bzw. Ammonium liegen.

6. Verwendung gemäß einem der vorhergehenden Patentansprüche, **dadurch gekennzeichnet,** daß der Bestandteil b) in Form der Alkaliprecursoren, vorzugsweise in Form von festem Alkalihydroxid und amorpher, dispers-pulverförmiger, wasserhaltiger Kieselsäure enthalten ist.

7. Verwendung gemäß einem der vorhergehenden Patentansprüche, **dadurch gekennzeichnet,** daß die Verbindung gemäß Bestandteil c) eine Wärmetönung von $\geq$ 500 joule/g beim Lösen in Wasser verursacht und aus der Gruppe der wasserfreien Oxide der zweiten Hauptgruppe des periodischen Systems, der Klinkerphasen, namentlich Alit ($C_3S$) und Tricalciumaluminat ($C_3A$) und/oder der Gruppe der Metallhydride stammt.

8. Verwendung gemäß einem der vorhergehenden Patentansprüche, **dadurch gekennzeichnet,** daß die Gewichtsverhältnisse von a) : b) : c) zwischen 80 bis 20 : 5 bis 60 : 0,1 bis 25 liegen.

9. Verwendung gemäß einem der vorhergehenden Patentansprüche, **dadurch gekennzeichnet,** daß schaumbildende Bestandteile, vorzugsweise beim Kontakt der Masse mit Wasser Gase freisetzende Stoffe enthalten sind.

**Claims**

1. Use of substances which set and harden in the presence of water, based on
a) mixtures containing fine particle $SiO_2$ or fine particle $SiO_2$ and $Al_2O_3$
b) at least partially water-soluble alkali silicates and/or ammonium silicates and/or alkali oxides or alkali hydroxides and amorphous dispersed powdery silicic acid as alkali-silicate precursors
c) such inorganic and/or metal organic composites which have, on contact with water, a strong evolution of heat of $\geq$ 500 joule/g which accelerates hardening of the substance, and
d) if appropriate, containing materials such as fillers, propellants and the like for the attachment of dowels and anchor bars in boreholes.

2. Use according to patent claim 1, **characterized in that** the weight ratio of $SiO_2$ and $Al_2O_3$ in the mixture to be used a) is in the region of 5 - 98 $SiO_2$ and 2 - 95 weight-% $Al_2O_3$, preferably between 5 - 80 and 95 - 20 weight-%.

3. Use according to patent claim 1 or 2, **characterized in that** the mixtures a) are dusts of high-temperature melting processes, filter dusts, electro-filter ashes from high-temperature power plants and/or calcinated bauxites.

4. Use according to one of the above patent claims, **characterized in that** a portion or all of the $SiO_2$ of portion a) is non-soluble $SiO_2$ of amorphous, dispersed powdery aqueous silicic acids.

5. Use according to one of the above patent claims, **characterized in that** in the portion b) the alkali is ammonium, sodium and/or potassium, and the molar ratios between alkali or ammonium and silicon dioxide are between 1 and 5, preferably 1.5 - 4 Mol $SiO_2$ per Mol alkali or ammonium respectively.

6. Use according to one of the above patent claims, **characterized in that** the portion b) is contained in the form of alkali precursors, preferably in the form of solid alkali hydroxide and amorphous, dispersed powdery aqueous silicic acid.

7. Use according to one of the above patent claims, **characterized in that** the composite according to portion c) causes an evolution of heat of $\geq$ 500 joule/g during dissolution in water, and that it originates from the group of non-aqueous oxides of the second main group of the periodic system, the clinker phases, i.e. alite ($C_3S$) and tricalcium aluminate ($C_3A$) and/or the group of metal hydrides.

8. Use according to one of the above patent claims, **characterized in that** the weight ratios of a) : b) : c) are between 80 to 20 : 5 to 60 : 0.1 to 25.

9. Use according to one of the above patent claims, **characterized in that** foam producing components are included which release gases, preferably on contact of the substance with water.

**Revendications**

1. Utilisation de compositions prenant et durcissant en présence de l'eau sur la base
   a) de mélanges contenant du $SiO_2$ à grains fins ou du $SiO_2$ et de l'$Al_2O_3$ à grains fins,
   b) de silicates alcalins au moins partiellement solubles dans l'eau et/ou de silicates d'ammonium et/ou d'oxydes ou hydroxydes alcalins et d'acide silicique amorphe et finement dispersé comme précurseurs des silicates alcalins,
   c) de composés inorganiques et/ou organométalliques qui, au contact de l'eau, dégagent une forte chaleur de réaction $\geq$ 500 joules/g qui accélère le durcissement de la composition, et
   d) contenant éventuellement des charges, agents moussants et analogues
      pour la fixation de chevilles et barres d'ancrage dans des trous de forage.

2. Utilisation selon la revendication 1, caractérisée en ce que dans le mélange a) à mettre en oeuvre, le rapport des poids entre le $SiO_2$ et l'$Al_2O_3$ est de l'ordre de 5 à 98 % en poids de $SiO_2$ pour 2 à 95 % en poids d'$Al_2O_3$, de préférence de 5 à 80 contre 95 à 20 % en poids.

3. Utilisation selon l'une des revendications 1 ou 2, caractérisée en ce que les mélanges a) sont constitués par des poussières provenant des processus de fusion à haute température, des poussières de filtration, des cendres d'électro-filtres provenant des centrales électriques à haute température et/ou des bauxites calcinées.

4. Utilisation selon l'une quelconque des revendications précédentes, caractérisée en ce qu'une partie ou la totalité du $SiO_2$ du constituant a) est du $SiO_2$ insoluble obtenu à partir d'acides siliciques amorphes et finement dispersés.

5. Utilisation selon l'une quelconque des revendications précédentes, caractérisée en ce que dans le constituant b), l'alcali est de l'ammonium, du sodium et/ou du potassium et que les rapports molaires entre l'alcali et respectivement l'ammonium et le dioxyde de silicium sont compris entre 1 et 5, de préférence entre 1,5 et 4 moles de $SiO_2$ par mole d'alcali et respectivement d'ammonium.

6. Utilisation selon l'une quelconque des revendications précédentes, caractérisée en ce que le constituant b) est contenu sous la forme des précurseurs d'alcali, de préférence sous la forme d'hydroxyde alcalin solide et d'acide silicique aqueux amorphe et finement dispersé.

7. Utilisation selon l'une quelconque des revendications précédentes, caractérisée en ce que le composé suivant le constituant c) dégage lors de la dissolution dans l'eau une chaleur de réaction $\geq 500$ joules/g et qu'il appartient au groupe des oxydes anhydres du deuxième groupe principal de la classification périodique des éléments, phases de clinkers, à savoir alite ($C_3S$) et aluminate tricalcique ($C_3A$), et/ou au groupe des hydrures métalliques.

8. Utilisation selon l'une quelconque des revendications précédentes, caractérisée en ce que les rapports de poids de a) : b) : c) sont de l'ordre de 80 à 20 : 5 à 60 : 0,1 à 25.

9. Utilisation selon l'une quelconque des revendications précédentes, caractérisée en ce que la composition contient des constituants moussants, de préférence des substances qui, au contact de l'eau, dégagent des gaz.